# EUROPÄISCHE PATENTSCHRIFT

(11) **EP 4 004 836 B1**
(45) Veröffentlichungstag und Bekanntmachung des Hinweises auf die Patenterteilung: **17.12.2025**
(21) Anmeldenummer: 20737152.7
(22) Anmeldetag: 06.07.2020
(51) Int. Cl.: B60L 53/30, B60L 53/66, B60L 53/67, B60L 53/68, G06Q 10/02, G06Q 10/0631

(54) **VERFAHREN ZUM BETRIEB EINES BUCHUNGSSYSTEMS EINER LADESTATION FÜR EIN ELEKTRISCHES FAHRZEUG**
METHOD FOR OPERATING A BOOKING SYSTEM OF A CHARGING STATION FOR AN ELECTRIC VEHICLE
PROCÉDÉ DE FONCTIONNEMENT D'UN SYSTÈME DE RÉSERVATION D'UNE STATION DE CHARGE POUR UN VÉHICULE ÉLECTRIQUE

(30) Priorität: 22.07.2019 DE 102019210848
(43) Veröffentlichungstag der Anmeldung: 01.06.2022
(73) Patentinhaber: Volkswagen Aktiengesellschaft, 38440 Wolfsburg (DE)
(72) Erfinder: STICHOWSKI, Torsten, 39128 Magdeburg (DE); SCHREINER, Dimitri, 38116 Braunschweig (DE); LANGE, Andreas, 38106 Braunschweig (DE); KRUMM, Carmen, 10589 Berlin (DE); SASSE, Adrian, 38100 Braunschweig (DE)
(86) Internationale Anmeldenummer: PCT/EP2020/068954
(87) Internationale Veröffentlichungsnummer: WO 2021/013508

(56) Entgegenhaltungen:
- WO-A1-2013/084684
- WO-A1-2014/118852
- DE-U1- 202018 005 039
- US-A1- 2018 105 053
- US-B2- 10 169 783

## Beschreibung

Die Erfindung betrifft ein Verfahren zum Betrieb eines Buchungssystems einer Ladestation für ein elektrisches Fahrzeug, insbesondere ein Verfahren eines Netzwerkservers zum Betrieb eines solchen Buchungssystems. Die Erfindung betrifft ferner einen Netzwerkserver, der zum Durchführen des erfindungsgemäßen Verfahrens eingerichtet ist.

Noch verfügen Elektrofahrzeuge im Vergleich zu konventionellen Fahrzeugen mit Verbrennungsmotor über eine geringere Reichweite. Die zum Nachladen der elektrischen Energie an einer Ladesäule benötigte Energie ist gleichzeitig wesentlich höher als die zum Betanken mit Benzin oder Diesel benötigte Zeit. Aus diesem Grund ist eine verlässliche Planung von Ladevorgängen für die Nutzer von Elektrofahrzeugen von großer Bedeutung.

Aus dem Stand der Technik ist es daher bereits bekannt Buchungs- bzw. Reservierungssysteme für Ladesäulen beziehungsweise Ladestationen eines elektrischen Fahrzeugs zu nutzen, um die Ladevorgänge einer Vielzahl von Nutzern zu koordinieren.

Beispielsweise beschreibt die US 2013/0151293 A1 ein Verfahren zum Koordinieren von Reservierungen einer elektrischen Ladesäule, gemäß dem in Reaktion auf eine von einem ersten Nutzer empfangene Buchungsanfrage ein der Anfrage entsprechendes Zeitfenster für den ersten Nutzer gebucht wird. Zumindest für einen ersten Abschnitt des Zeitfensters wird die Energieabgabe für andere Nutzer, die nicht der erste Nutzer sind, blockiert.

Die WO 2014/118852 A1 offenbart ein Verfahren eines Servers zum Verwalten von Reservierungen einer Ladestation, wobei eine in einer Reservierung enthaltene ID eines Fahrzeugs mit einer Fahrzeug ID in einer Ladeanfrage verglichen, ein Ladevorgang autorisiert wird, wenn die IDs übereinstimmen, und verhindert wird, wenn die IDs nicht übereinstimmen. Eine Blockade der Ladesäule durch ein weiteres Fahrzeug ist in dieser Schrift nicht behandelt.

Prinzipiell sind derartige Buchungssysteme zwar geeignet, die Wahrscheinlichkeit zu erhöhen, dass ein geplanter Ladevorgang auch tatsächlich durchgeführt wird. In der Praxis kann es jedoch dazu kommen, dass die gebuchte Ladesäule blockiert ist, beispielsweise durch ein anderes Fahrzeug, und deshalb der geplante Ladevorgang nicht durchgeführt werden kann.

Die US 10,169,783 B2 beschreibt ebenfalls ein Reservierungssystem für eine Ladestation, bei dem ein Nutzer, der ein Zeitfenster für einen Ladevorgang gebucht und im Voraus gezahlt hat, Authentifizierungsinformationen erhält, um den Ladevorgang beginnen zu können. Gemäß einer bevorzugten Ausführungsform wird ferner Ortsinformationen von Fahrzeugen genutzt, um verfügbare beziehungsweise bereits besetzte Ladestationen in der Nähe zu ermitteln.

Zwar ermöglicht dieses Verfahren prinzipiell, dass ein Nutzer vorab über eine Belegung der Ladesäule informiert wird, es kann jedoch dennoch dazu kommen, dass ein Nutzer eine vorab bezahlte Buchung an der Ladesäule nicht wahrnehmen kann. Dies ist ein deutlicher Nachteil bekannter Buchungssysteme, welcher nachteilig für die Akzeptanz von Elektrofahrzeugen ist.

Die US 10,217,160 B2 beschreibt ein Verfahren zum Bereitstellen von Zahlungsoptionen für einen Nutzer einer elektrischen Ladesäule. Gemäß einer bevorzugten Durchführungsform wird ein zu einer Ladestation gehörender Parkplatz blockiert, sofern die Ladesäule durch einen Nutzer gebucht wird. Dies soll beispielsweise durch mechanische Barrieren erfolgen. Eine solche Ausstattung von Ladesäulen ist jedoch teuer und gegebenenfalls nicht zulässig.

Um die Akzeptanz von Elektrofahrzeugen zu erhöhen, sollte Nutzern daher zumindest eine Kompensationsmöglichkeit gegeben werden, sofern eine kostenpflichtige Buchung nicht wahrgenommen werden kann. Dies kann beispielsweise dadurch erfolgen, dass Nutzer eine Blockade der Ladestation melden und in Reaktion die Kosten der Buchung erstattet bekommen.

Aus dem Stand der Technik ist kein zuverlässiges und automatisiertes Verfahren bekannt, um eine Blockade einer Ladesäule durch einen Nutzer zu melden. Prinzipiell besteht natürlich die Möglichkeit ein Foto der Nahbereichssituation zu erstellen und an einen Kundendienst zu senden. Ferner ist ein kleiner Teil existierender Ladesäulen mit einer Sensorik ausgestattet, die das Erfassen einer Blockade im Nahbereich der Ladestation ermöglichen soll.

Die aus dem Stand der Technik bekannten Lösungen zum Melden einer Blockade einer gebuchten Ladestation sind jedoch aus verschiedenen Gründen nachtzeilig. So ist die Aufnahme eines Fotos der Blockade bereits aus datenschutzrechtlichen Erwägungen problematisch. Ferner lässt sich die Analyse eines Fotos zur Einschätzung, ob tatsächlich eine Ladesäulenblockade vorliegt, nur schwer automatisieren. Das Verwenden zusätzlicher Sensoren in der Ladesäule ist zwar grundsätzlich zum Erkennen einer Blockade geeignet, ist jedoch mit zusätzlichen Kosten verbunden und anfällig für Defekte und Vandalismus.

Der Erfindung liegt daher die Aufgabe zugrunde, den Stand der Technik zu bereichern und ein automatisiertes Verfahren zum Erfassen und Melden von Ladesäulenblockaden im Zusammenhang mit Buchen und Reservieren von Ladesäulen zur Verfügung zu stellen.

Die erfindungsgemäße Aufgabe wird gelöst durch die Gegenstände der Hauptansprüche. Bevorzugte Weiterbildungen sind Gegenstand der jeweils rückbezogenen Unteransprüche.

Ein Aspekt der vorliegenden Erfindung betrifft ein Verfahren zum Betrieb eines Buchungssystems einer Ladestation für ein elektrisches Fahrzeug. Das erfindungsgemäße Verfahren wird bevorzugt von einem Netzwerkserver durchgeführt. Bei dem Netzwerkserver handelt es sich bevorzugt um einen Backendserver eines Betreibers der Ladestation.

Bevorzugt ist der Netzwerkserver dazu ausgebildet, mit der Vielzahl von Ladestationen zu kommunizieren und ein Buchungssystem für die Vielzahl von Ladestationen zu betreiben. Unter einem Buchungssystem wird im Rahmen der vorliegenden Anmeldung im weitesten Sinne verstanden, dass ein Nutzer im Vorfeld eine bestimmte Ladestation für einen bestimmten Zeitraum buchen kann. Ein Laden an der Ladestation ist dann innerhalb des gebuchten Zeitraums, zumindest in einem ersten Abschnitt davon, nur für den Nutzer möglich, der die Buchung vorgenommen hat. Ebenfalls bevorzugt ist das Buchungssystem dazu ausgebildet, die Zahlung für den Ladevorgang abzuwickeln. Hierbei kann es vorgesehen sein, dass vor der Buchung eine Buchungsgebühr zu zahlen ist. Die Kosten der tatsächlichen entnommenen elektrischen Energie können ebenfalls im Vorfeld oder im Nachhinein zum tatsächlich erfolgten Ladevorgang beglichen werden. Das Buchungssystem ist beispielsweise als ein auf dem Netzwerkserver lokalisiertes Datenbanksystem ausgebildet. Verschiedene Nutzer kommunizieren bevorzugt mit dem Netzwerkserver über eine Drahtlosschnittstelle ihres Fahrzeugs oder mobilen Endgeräts und sind, gegebenenfalls nach einer Registrierung auf dem Netzwerkserver, zur Vornahme von Buchungen berechtigt. Buchungssysteme für Ladestationen sind dem Fachmann prinzipiell aus dem Stand der Technik bekannt.

In einem ersten Schritt des erfindungsgemäßen Verfahrens wird eine Blockademeldung für eine erste Ladestation von einem Nutzer empfangen. Die erste Ladestation ist dabei bevorzugt eine von einer Vielzahl von Ladestationen. Die Blockademeldung ist bevorzugt in einer über eine Drahtlosschnittstelle empfangenen Nachricht enthalten. Die Blockademeldung enthält zumindest die Information, dass der Nutzer für die erste Ladestation zu einem bestimmten ersten Zeitpunkt eine Blockade, also die Unmöglichkeit einen Ladevorgang an der Ladestation durchzuführen, meldet. Darüber hinaus weist die Blockademeldung weitere Informationen zu einer Identität des Nutzers und zu einer eindeutigen Kennung der ersten Ladestation auf. Die von dem Nutzer empfangene Blockademeldung wird von dem Netzwerkserver zwischengespeichert, beispielsweise in einem Speicher eines Kommunikationsmoduls. Die Weiterverarbeitung der Blockademeldung hängt im erfindungsgemäßen Verfahren von einer Mehrzahl zusätzlicher Faktoren ab, wie im Folgenden im Detail erläutert wird.

Im erfindungsgemäßen Verfahren wird in Reaktion auf den Empfang der Blockademeldung ein aktueller Abstand zwischen dem Nutzer und der ersten Ladestation ermittelt. Die dafür benötigten Informationen sind vorzugsweise bereits in der Blockademeldung enthalten oder werden in Reaktion auf den Empfang der Blockademeldung von dem Netzwerkserver eingeholt. Die Informationen werden bevorzugt von dem Nutzer oder der ersten Ladestation eingeholt. Der aktuelle Abstand zwischen dem Nutzer und der ersten Ladestation bezeichnet somit einen Abstand kurz vor, zu oder kurz nach dem Zeitpunkt des Empfangs der Blockademeldung. Bevorzugt bezeichnet der aktuelle Abstand den Abstand in einem Zeitfenster von ± 30 oder ebenfalls bevorzugt von ±1s, ±5s, ±10s um den Zeitpunkt des Erhalts der Blockademeldung.

Im erfindungsgemäßen Verfahren wird in Reaktion auf den Empfang der Blockademeldung ferner ein aktueller Ladezustand der ersten Ladestation ermittelt. Der Ladezustand der Ladestation gibt dabei an, ob an der ersten Ladestation aktuell ein Fahrzeug angeschlossen ist und/oder elektrischer Strom durch das Fahrzeug entnommen wird. Die dafür notwendigen Informationen sind vorzugsweise bereits in der Blockademeldung enthalten oder werden in Reaktion auf den Empfang der Blockademeldung von dem Netzwerkserver eingeholt. Die Informationen werden bevorzugt vom Nutzer oder der ersten Ladestation eingeholt. Der aktuelle Ladezustand bezeichnet somit einen Ladezustand kurz vor, zu oder kurz nach dem Zeitpunkt des Empfangs der Blockademeldung. Bevorzugt bezieht sich der aktuelle Ladezustand auf ein Zeitfenster von ± 30 oder von ±1s, ±5s, ±10s um den Zeitpunkt des Erhalts der Blockademeldung.

Im erfindungsgemäßen Verfahren wird in Reaktion auf den Empfang der Blockademeldung ferner ein aktueller Buchungseintrags der ersten Ladestation ermittelt. Der Buchungseintrag bezeichnet dabei, ob und für wen zu dem Zeitpunkt des Erhalts der Blockademeldung eine Reservierung der ersten Ladestation in dem Buchungssystem gespeichert ist. Der Netzwerkserver benötigt für diese Abfrage lediglich den Zeitpunkt des Erhalts der Blockademeldung, gegebenenfalls einschließlich eines Zeitfensters um diesen Zeitpunkt, beispielsweise von ± 30 oder von ±1s, ±5s oder ±10s. Besonders bevorzugt wird das Buchungssystem von dem Netzwerkserver selbst betrieben, so dass dieser unmittelbar auf die Buchungsinformationen zugreifen kann. Alternativ werden die Blockademeldung und das Buchungssystem von verschiedenen Servern oder Serverkomponenten betrieben, die miteinander kommunizieren. In diesem Fall werden die Buchungsinformationen abgerufen.

Im erfindungsgemäßen Verfahren erfolgt schließlich das Verwerfen oder das Weiterverarbeiten der Blockademeldung in Abhängigkeit des Abstands, des Ladezustands und des Buchungseintrags. Somit werden im erfindungsgemäßen Verfahren verschiedene Signale ausgewertet, die in einem kausalen Zusammenhang eine zuverlässige Indikation geben, ob an der Ladesäule ein Ladevorgang zum aktuellen Zeitpunkt möglich ist oder nicht. Somit kann eine von einem Nutzer empfangene Blockademeldung vorteilhaft verifiziert und weiterverarbeitet oder aber falsifiziert und verworfen werden. Da die Blockademeldung eine Kostenrückerstattung zur Folge haben kann, werden somit Missbrauch und Verlusten des Betreibers vorgebeugt.

In einer bevorzugten Durchführungsform des erfindungsgemäßen Verfahrens wird die Blockademeldung von einem Fahrzeug oder von einem mobilen Endgerät des Nutzers empfangen. Besonders bevorzugt ist in dem Fahrzeug, beispielsweise dem Infotainmentsystem desselben, oder auf dem mobilen Endgerät eine Anwendung installiert, die es dem Nutzer ermöglicht eine Blockademeldung für eine bestimmte Ladestation an den Netzwerkserver zu übermitteln. Sofern sich der Nutzer mit seinem elektrischen Fahrzeug einer blockierten Ladestation nähert, kann dieser somit einfach eine Blockademeldung abgeben. Dabei ist die Position des mobilen Endgeräts oder des Fahrzeugs im erfindungsgemäßen Verfahren gleich der aktuellen Position des Nutzers. Ebenso bevorzugt wird der Nutzer anhand einer in der Blockademeldung enthaltenen Identifikationsinformation des Fahrzeugs, beispielsweise Kennzeichen oder Fahrgestellnummer, oder des mobilen Endgeräts, eindeutig identifiziert.

Besonders bevorzugt wird in dem erfindungsgemäßen Verfahren eine aktuelle Position des Fahrzeugs oder mobilen Endgeräts empfangen. Diese Informationen sind vorzugsweise bereits in der Blockademeldung enthalten oder werden von dem Netzwerkserver in Reaktion auf die Blockademeldung von dem Netzwerkserver eingeholt, also von dem Fahrzeug oder dem mobilen Endgerät abgerufen. Dabei ist es denkbar, dass die Blockademeldung von dem mobilen Endgerät des Nutzers, die Position hingegen von dem Fahrzeug abgerufen wird. Somit wird sichergestellt, dass sich das Fahrzeug tatsächlich nahe der Ladestation befindet, ein Ladevorgang somit tatsächlich vom Nutzer geplant und gewünscht war. Anhand der von dem Fahrzeug oder dem mobilen Endgerät empfangenen Position wird im erfindungsgemäßen Verfahren dann, vorzugsweise vom Netzwerkserver, der Abstand zwischen dem Nutzer und der Ladestation ermittelt. Ebenfalls bevorzugt wird der Abstand direkt im Fahrzeug oder mobilen Endgerät ermittelt und an den Netzwerkserver übermittelt. Moderne Fahrzeuge und mobile Endgeräte verfügen nahezu ausnahmslos über einen GPS-Sendeempfänger und somit sind die Positionsdaten gemäß dieser Durchführungsform besonders einfach und exakt erfassbar.

Bei der Bestimmung des Abstands zwischen dem Nutzer und der ersten Ladestation wird ferner die feste Position der ersten Ladestation verwendet. Diese ist bevorzugt in dem Netzwerkserver hinterlegt und wird von diesem anhand von mit der Blockademeldung erhaltenen Identifikationsinformationen der ersten Ladesäule ermittelt, beispielsweise aus einem Speicher abgerufen. Alternativ bevorzugt ist die Positionsinformation der Ladestation in dieser hinterlegt und wird von dieser dem Fahrzeug oder mobilen Endgerät des Nutzers übermittelt, beispielsweise über eine Nahfeldkommunikation. Ebenfalls bevorzugt bestehen die Identifikationsinformationen der Ladestation aus deren geographischen Koordinaten.

Alternativ bevorzugt wird der Abstand zwischen dem Nutzer und der Ladestation im erfindungsgemäßen Verfahren als der Abstand zwischen dem Fahrzeug und der Ladestation empfangen. Dabei wird der Abstand von dem Fahrzeug empfangen und basiert auf Messdaten zumindest eines ersten Sensors, insbesondere Abstandssensors des Fahrzeugs. Moderne Fahrzeuge verfügen in der Regel über Abstandssensoren, wie beispielsweise LIDAR oder Ultraschall, so dass auch diese Durchführungsform einfach zu implementieren ist. Ebenfalls bevorzugt werden die Abstandsdaten von der Ladestation ermittelt, beispielsweise mittels in der Ladestation verbauter Sensoren oder anhand eines Signals einer Verbindung zwischen der Ladestation und dem Fahrzeug oder mobilen Endgerät des Nutzers (ToF, ToA, etc.).

Der aktuelle Ladezustand der Ladestation wird im erfindungsgemäßen Verfahren bevorzugt anhand eines aktuellen Steckerstatus oder anhand einer aktuellen Leistungsabgabe der Ladesäule ermittelt. Der Steckerstatus gibt dabei an, ob der Ladestecker der Ladestation aktuell in eine Ladebuchse eines Fahrzeugs eingesteckt ist. Dies wird bevorzugt durch einen in dem Stecker verbauten Sensor, beispielsweise einem Drucksensor oder -schalter, erfasst. Alternativ oder zusätzlich wird eine aktuelle Leistungsabgabe der Ladestation ermittelt. Da eine Blockade einer Ladestation besonders durch ein zuvor an der Station geladenes Fahrzeug verursacht sein kann, dass zwar den Ladevorgang beendet hat, jedoch nicht von der Ladestation entfernt wurde, ist das Ermitteln des Ladezustands anhand des Steckerstatus bevorzugt. Die Informationen liegen in der Regel in der Ladestation selbst vor und werden von dieser an den Netzwerkserver übermittelt. Ebenso bevorzugt werden diese Informationen über eine Nahfeldkommunikation, beispielsweise Bluetooth, von der Ladestation an das Fahrzeug oder mobile Endgerät des Nutzers übermittelt und von diesem an den Netzwerkserver weitergeleitet.

Im erfindungsgemäßen Verfahren wird die Blockademeldung schließlich verworfen, das heißt vom den Netzwerkserver gelöscht oder von der weiteren Bearbeitung ausgenommen, sofern der ermittelte Abstand zwischen Nutzer und erster Ladestation einen vorbestimmten Abstand überschreitet, wenn der ermittelte Ladezustand der ersten Ladestation das Laden, beziehungsweise einen aktuellen Ladevorgang, eines zweiten Fahrzeugs an der ersten Ladestation anzeigt oder wenn der anhand der Blockadeinformation ermittelte Buchungseintrag nicht zu dem Nutzer korrespondiert. Unter einem aktuellen Ladevorgang wird hierbei auch verstanden, dass der Stecker der Ladestation in dem zweiten Fahrzeug gesteckt ist aber keine elektrische Leistung mehr von dem zweiten Fahrzeug abgerufen wird (abgeschlossener Ladevorgang mit nicht abgezogenem Stecker). Mit anderen Worten muss für ein Verwerfen der Blockademeldung nur eine der vorgenannten Bedingungen nicht erfüllt sein.

Im erfindungsgemäßen Verfahren wird die Blockademeldung weiterverarbeitet, also nicht verworfen, wenn der ermittelte Abstand zwischen Nutzer und erster Ladestation einen vorbestimmten Abstand unterschreitet, wenn der ermittelte Ladezustand der ersten Ladestation kein Ladevorgang eines zweiten Fahrzeugs an der ersten Ladestation anzeigt und wenn der wenn der anhand der Blockadeinformation ermittelte Buchungseintrag zu dem Nutzer korrespondiert. Unter einem aktuellen Ladevorgang wird auch hier verstanden, dass der Stecker der Ladestation in dem zweiten Fahrzeug gesteckt ist aber keine elektrische Leistung mehr von dem zweiten Fahrzeug abgerufen wird (abgeschlossener Ladevorgang mit nicht abgezogenem Stecker). Mit anderen Worten müssen für das Weiterverarbeiten der Blockademeldung alle der vorgenannten Bedingungen kumulativ erfüllt sein.

Wie bereits ausgeführt, erfolgt im erfindungsgemäßen Verfahren somit eine Auswertung von verschiedenen Signalen, die gemeinsam eine zuverlässige Indikation geben, ob an der Ladesäule ein Ladevorgang zum aktuellen Zeitpunkt möglich ist oder nicht. Die Quelle dieser Informationen sind dabei das Fahrzeug, ein mobiles Endgerät mit entsprechender App, eine Kombination aus beiden oder gegebenenfalls die erste Ladestation selbst. Erfindungsgemäß werden insbesondere die Signale Ladezustand, Abstand beziehungsweise Position sowie Zeit beziehungsweise Buchungseintrag bereitgestellt beziehungsweise ermittelt.

Der im erfindungsgemäßen Verfahren durchgeführte Abgleich der Position des Nutzers mit der Position der Ladestation ermöglicht eine Überprüfung, ob die Ladestation zum Zeitpunkt der Blockademeldung überhaupt erreicht wurde beziehungsweise in der Nähe des Nutzers war. Eine missbräuchliche Blockademeldung aus größerer Entfernung, beispielsweise zum Verschleiern einer eine Kompensation ausschließenden Verspätung, wird so unterbunden.

Wird die Blockade hingegen aus hinreichend kurzer Entfernung gemeldet, ist ferner relevant, ob die erste Ladestation aktuell durch ein zweites Fahrzeug belegt wird. Ist dies der Fall, wird die Ladestation zunächst als belegt und nicht als blockiert erfasst, sodass auch dann zunächst keine Blockade der Ladestation geltend gemacht werden kann. In diesem Fall ist ferner zu prüfen, ob lediglich der Stecker in das zweite Fahrzeug gesteckt ist oder tatsächlich eine Leistungsabgabe an das zweite Fahrzeug erfolgt. Zumindest bei einer tatsächlichen Leistungsabgabe ist gegebenenfalls von einer zulässigen Nutzung der ersten Ladestation und somit nicht von einer Blockade derselben durch das zweite Fahrzeug auszugehen. Wird alternativ erkannt, dass die Belegung der Säule innerhalb des Buchungszeitraums liegt und der angemeldete Nutzer nicht dem Buchungsnutzer entspricht, liegt gegebenenfalls ein Fehler im Buchungssystem aber keine Blockade im eigentlichen Sinn vor. Ist hingegen lediglich der Stecker gesteckt ist die Ladestation gegebenenfalls durch den zuvor Ladenden blockiert. In jedem Fall wird im erfindungsgemäßen Verfahren für den Fall, dass zum Zeitpunkt der Blockademeldung kein Ladevorgang stattfindet, und unter Berücksichtigung der weiteren Informationen zum Buchungseintrag und dem Abstand, eine Blockade der Ladestation ermittelt.

Im erfindungsgemäßen Verfahren gilt das Ermitteln einer Blockade der Ladestation bevorzugt nur vorbehaltlich des weiteren Zeitverlaufs. In einer bevorzugten Durchführungsform des erfindungsgemäßen Verfahrens erfolgt ferner das Ermitteln eines Ladevorgangs des Nutzers in einem den zu ermittelten Buchungseintrag korrespondierenden Zeitfenster. Insbesondere wird der Ladevorgang nach dem Durchführen der oben genannten Schritte des erfindungsgemäßen Verfahrens, bevorzugt als Teil des Weiterverarbeitens der Blockademeldung durchgeführt.

Gemäß dieser Durchführungsform erfolgt in Reaktion auf das Ermitteln des Ladevorgangs des Nutzers in dem zum ermittelten Buchungseintrag korrespondierenden Zeitfenster ferner das Weiterverarbeiten der Blockademeldung im Buchungssystem für eine teilweise Erstattung von Buchungsgebühren. Mit anderen Worten wird, wenn der Kunde kurze Zeit später den Stecker wieder stecken und daraufhin den Ladevorgang beginnen kann, von einer temporären Blockade ausgegangen, bei der ein Anspruch auf teilweise Erstattung der Buchungskosten entsteht.

In einer ebenfalls bevorzugten Durchführungsform des erfindungsgemäßen Verfahrens wird nach dem Durchführen der oben genannten Schritte, insbesondere nach dem Ermitteln einer Blockade, kein Ladevorgang des Nutzers in einem zu dem ermittelten Buchungseintrag korrespondierenden Zeitfenster ermittelt. Mit anderen Worten kann der Nutzer während des gesamten gebuchten Zeitraums den Stecker der Ladestation nicht stecken und entfernt sich gegebenenfalls sogar von der Ladestation. In diesem Fall wird die Blockademeldung im Buchungssystem für eine vollständige Erstattung von Buchungsgebühren weiterverarbeitet. Mit anderen Worten wird von einer vollständigen Blockade ausgegangen, bei der gegebenenfalls ein Anspruch auf vollständige Erstattung der Buchungskosten des Nutzers entsteht.

In einer ferner bevorzugten Durchführungsform des erfindungsgemäßen Verfahrens hat der Nutzer weiterhin die Möglichkeit den Vorfall zu kommentieren, beispielsweise durch Ergänzen der Blockademeldung um eine Textnachricht. Dies hat gegebenenfalls den Vorteil, dass zusätzliche Informationen zum Bewerten der Blockadesituation erfasst werden können.

Ein weiterer Aspekt der Erfindung betrifft ein Fahrzeug, insbesondere einen zum Durchführen der Schritte eines Fahrzeugs im erfindungsgemäßen Verfahren eingerichteten Personenkraftwagen mit Verbrennungs-, Elektro- oder Hybridmotor. Das Fahrzeug weist einen zum Erfassen von Umgebungsdaten eingerichteten ersten Sensor und ein zur Kommunikation mit einem Netzwerkserver und einer Ladestation eingerichtetes Kommunikationsmodul auf.

Der zumindest eine erste Sensor ist dabei dazu ausgebildet, die Umgebung des Fahrzeugs betreffende Sensorsignale zu erfassen. Dabei versetzt ein mittels des zumindest einen ersten Sensors empfangenes Umgebungssignal das Fahrzeug bevorzugt in die Lage, sich über seine Umgebung zu informieren und bildet bevorzugt eine Vielzahl von Umweltinformationen ab. Bei dem ersten Sensor handelt es sich beispielsweise um bildgebenden Sensoren, wie Kameras, um Abstandssensoren, wie LIDAR, und/oder um einen GPS Sensor oder dergleichen.

Das erste Kommunikationsmodul ist bevorzugt zur Kommunikation mit weiteren Vorrichtungen, wie beispielsweise GPS-Satelliten oder einer smarten Infrastruktur, eingerichtet. Das erste Kommunikationsmodul weist bevorzugt einen Funk-, Mobilfunk-, WLAN-, und/oder Bluetooth-Transceiver oder alternative Drahtloskommunikationsgeräte auf. Das Fahrzeug weist ferner ein elektrisches Fahrsystem mit einem elektrischen Energiespeicher, insbesondere einem Batteriesystem auf, wobei letzteres über einen Ladeanschluss geladen werden kann.

Das Fahrzeug weist ferner eine erste Steuereinheit auf, die dafür eingerichtet ist, mit dem zumindest einen ersten Sensor und mit dem ersten Kommunikationsmodul zu kommunizieren. Die Steuereinheit ist ferner dafür eingerichtet, die Schritte des Fahrzeugs in dem erfindungsgemäßen Verfahren durchzuführen beziehungsweise die anderen Komponenten des Fahrzeugs zur Durchführung der Schritte des erfindungsgemäßen Verfahrens anzuleiten.

Die erste Steuereinheit ist insbesondere dazu ausgebildet, eine Nutzereingabe zu erfassen und in Reaktion auf die Nutzereingabe eine Blockademeldung für eine erste Ladestation an einen Netzwerkserver zu übermitteln. Die Steuereinheit ist bevorzugt dazu ausgebildet, eine Position des Fahrzeugs und/oder einen Abstand zu der ersten Ladestation zu ermitteln und gemeinsam oder zusätzlich zur Blockademeldung an den Netzwerkserver zu übermitteln. Die Steuereinheit ist bevorzugt dazu ausgebildet, Informationen zu einer geographischen Position der ersten Ladestation, Identifikationsinformationen der ersten Ladestation und/oder Informationen zu einem Ladezustand der ersten Ladestation von der ersten Ladestation zu empfangen und diese an den Netzwerkserver weiterzuleiten. Die Steuereinheit ist bevorzugt dazu ausgebildet, Identifikationsinformationen des Fahrzeugs an den Netzwerkserver zu übermitteln.

Ein weiterer Aspekt der Erfindung betrifft ein Verfahren einer Steuereinheit eines Fahrzeugs, welches zumindest einen zum Erfassen von Umgebungsdaten eingerichteten ersten Sensor, zumindest einen zum Erfassen von Zustandsdaten des Fahrzeugs eingerichteten zweiten Sensor und ein Kommunikationsmodul sowie die Steuereinheit aufweist, wobei das Verfahren zumindest die folgenden Schritte aufweist: Erfassen einer Nutzereingabe und Übermitteln einer Blockademeldung für eine erste Ladestation an einen Netzwerkserver in Reaktion auf die Nutzereingabe, bevorzugt Ermitteln einer Position des Fahrzeugs und/oder eines Abstand zu der ersten Ladestation und Übermitteln der Position und/oder des Abstands gemeinsam oder zusätzlich zur Blockademeldung an den Netzwerkserver, bevorzugt Empfangen von Informationen zu einer geographischen Position, Identifikationsinformationen und/oder Informationen zu einem Ladezustand von der ersten Ladestation und ebenfalls bevorzugt Weiterleiten der empfangenen Informationen an den Netzwerkserver.

Ein weiterer Aspekt der vorliegenden Erfindung betrifft einen Netzwerkserver, beispielsweise einen Netzwerkserver eines Betreibers von Ladestationen für elektrische Fahrzeuge oder eines Servicepartners. Der erfindungsgemäße Netzwerkserver weist ein zur Datenkommunikation mit einer Mehrzahl von Ladestationen sowie Fahrzeugen und/oder mobilen Endgeräten eingerichtetes zweites Kommunikationsmodul und eine zweite Steuereinheit auf. Dabei ist die zweite Steuereinheit des Netzwerkservers dafür eingerichtet, das erfindungsgemäße Verfahren durchzuführen. Die zweite Steuereinheit ist insbesondere dazu ausgebildet, das zweite Kommunikationsmodul zum Empfangen einer Blockademeldung für eine erste Ladestation von einem Nutzer anzusteuern, einen aktuellen Abstand zwischen dem Nutzer und der ersten Ladestation zu ermitteln, einen aktuellen Ladezustand der ersten Ladestation zu ermitteln und einen aktuellen Buchungseintrag der ersten Ladestation zu ermitteln und ist ferner dafür eingerichtet, die empfangene Blockademeldung in Abhängigkeit des Abstands, des Ladezustands und des Buchungseintrags zu verwerfen oder weiterzuverarbeiten.

Ein weiterer Aspekt der vorliegenden Erfindung betrifft ein System aus einem erfindungsgemäßen Netzwerkserver, wie obenstehend beschrieben, und einem Fahrzeug, wie obenstehend beschrieben. Vorteilhaft können alle Verfahrensschritte und Aspekte des erfindungsgemäßen Verfahrens in dem erfindungsgemäßen System verwirklicht werden. Ebenso bevorzugt umfasst das erfindungsgemäße System ferner ein mobiles Endgerät, insbesondere ein Smartphone oder dergleichen. Das mobile Endgerät weist dabei bevorzugt ein zur Kommunikation mit dem Netzwerkserver und gegebenenfalls dem Fahrzeug eingerichtetes drittes Kommunikationsmodul auf. Das mobile Endgerät weist ferner eine dritte Steuereinheit auf, die zum Durchführen der Schritte des mobilen Endgeräts in dem erfindungsgemäßen Verfahren ausgebildet ist. Bevorzugt ist die dritte Steuereinheit dazu ausgebildet, eine Nutzereingabe zu erfassen und in Reaktion auf die Nutzereingabe eine Blockademeldung für eine erste Ladestation an einen Netzwerkserver zu übermitteln. Die Steuereinheit ist bevorzugt dazu ausgebildet, eine Position des mobilen Endgeräts und/oder einen Abstand zu der ersten Ladestation zu ermitteln und gemeinsam oder zusätzlich zur Blockademeldung an den Netzwerkserver zu übermitteln. Die Steuereinheit ist bevorzugt dazu ausgebildet, Informationen zu einer geographischen Position der ersten Ladestation, Identifikationsinformationen der ersten Ladestation und/oder Informationen zu einem Ladezustand der ersten Ladestation von der ersten Ladestation zu empfangen und diese an den Netzwerkserver weiterzuleiten. Die Steuereinheit ist bevorzugt dazu ausgebildet, Identifikationsinformationen des mobilen Endgeräts an den Netzwerkserver zu übermitteln.

Ein weiterer Aspekt der Erfindung betrifft ein Computerprogramm, umfassend Befehle, die bei der Ausführung des Programms durch einen Computer, wie beispielsweise eine Steuereinheit eines Fahrzeugs, diesen veranlassen, die Schritte des Fahrzeugs im erfindungsgemäßen Verfahren durchzuführen. Ein weiterer Aspekt der Erfindung betrifft ein Computerprogramm, umfassend Befehle, die bei der Ausführung des Programms durch einen Computer, wie beispielsweise eine Steuereinheit eines Netzwerkservers, diesen veranlassen, die Schritte des Netzwerkservers im erfindungsgemäßen Verfahren durchzuführen, insbesondere die Schritte: Empfangen einer Blockademeldung für eine erste Ladestation von einem Nutzer, Ermitteln eines aktuellen Abstands zwischen dem Nutzer und der ersten Ladestation, Ermitteln eines aktuellen Ladezustands der ersten Ladestation, Ermitteln eines aktuellen Buchungseintrags der ersten Ladestation, und Verwerfen oder Weiterverarbeiten der Blockademeldung in Abhängigkeit des Abstands, des Ladezustands und des Buchungseintrags.

Die Verfahrensschritte des erfindungsgemäßen Verfahrens können durch elektrische oder elektronische Bauteile oder Komponenten (Hardware), durch Firmware (ASIC) implementiert sein oder durch beim Ausführen eines geeigneten Programms (Software) verwirklicht werden. Ebenfalls bevorzugt wird das erfindungsgemäße Verfahren durch eine Kombination von Hardware, Firmware und/oder Software verwirklicht, beziehungsweise implementiert. Beispielsweise sind einzelne Komponenten zum Durchführen einzelner Verfahrensschritte als separat integrierter Schaltkreis ausgebildet oder auf einem gemeinsamen integrierten Schaltkreis angeordnet. Einzelne zum Durchführen einzelner Verfahrensschritte eingerichtete Komponenten sind ferner bevorzugt auf einem (flexiblen) gedruckten Schaltungsträger (FPCB/PCB), einem Tape Carrier Package (TCP) oder einem anderen Substrat angeordnet.

Die einzelnen Verfahrensschritte des erfindungsgemäßen Verfahrens sind ferner bevorzugt als ein oder mehrere Prozesse ausgebildet, die auf einem oder mehreren Prozessoren in einem oder mehreren elektronischen Rechengeräten laufen und beim Ausführen von ein oder mehreren Computerprogrammen erzeugt werden. Die Rechengeräte sind dabei bevorzugt dazu ausgebildet, mit anderen Komponenten, beispielsweise einem Kommunikationsmodul, und gegebenenfalls ein oder mehreren Sensoren zusammenzuarbeiten, um die hierin beschriebenen Funktionalitäten zu verwirklichen. Die Anweisungen der Computerprogramme sind dabei bevorzugt in einem Speicher abgelegt, wie beispielsweise einem RAM-Element. Die Computerprogramme können jedoch auch in einem nicht-flüchtigen Speichermedium, wie beispielsweise einer CD-ROM, einem Flash-Speicher oder dergleichen abgelegt sein.

Dem Fachmann ist ferner ersichtlich, dass die Funktionalitäten von mehreren Computern (Datenverarbeitungsgeräten) kombiniert oder in einem einzigen Gerät kombiniert sein können oder dass die Funktionalität von einem bestimmten Datenverarbeitungsgerät auf eine Vielzahl von Geräten verteilt vorliegen kann, um die Schritte des erfindungsgemäßen Verfahrens auszuführen, ohne von dem erfindungsgemäßen Verfahren abzuweichen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines erfindungsgemäßen Systems aus einem erfindungsgemäßen Fahrzeugs und einem erfindungsgemäßen Netzwerkserver gemäß einer Ausführungsform; und
- Figur 2: ein Ablaufdiagramm eines im erfindungsgemäßen System durchgeführten erfindungsgemäßen Verfahrens gemäß einer Durchführungsform.

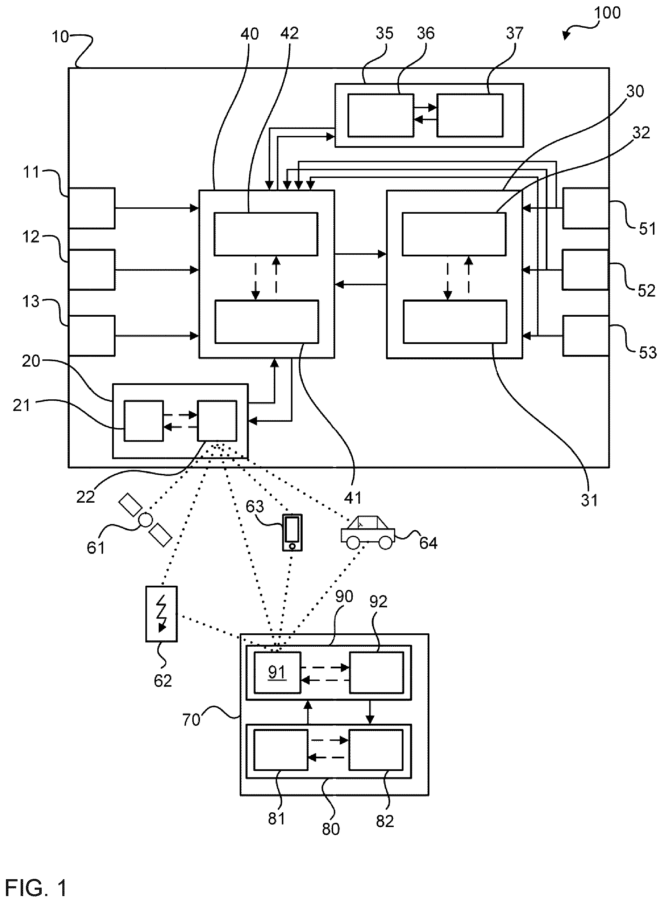

Figur 1 zeigt eine schematische Darstellung, insbesondere ein Blockdiagramm eines beispielhaften Fahrzeugs 10, insbesondere eines zweispurigen Fahrzeugs mit Verbrennungs-, Elektro- oder Hybridmotor. Das Fahrzeug 10 umfasst eine Vielzahl erster Sensoren, insbesondere einen ersten Sensor 11, einen zweiten Sensor 12
und einen dritten Sensor 13. Die ersten Sensoren 11, 12, 13 sind eingerichtet zum Erfassen von Umgebungsdaten des Fahrzeugs 10 und umfassen beispielsweise eine Kamera zum Erfassen eines Bildes einer das Fahrzeug 10 unmittelbar umgebenden Umwelt, Abstandssensoren, wie beispielsweise Ultraschallsensoren oder LIDAR, zum Erfassen von Abständen zu das Fahrzeug 10 umgebenden Objekten. Die ersten Sensoren 11, 12, 13 übertragen die von ihnen erfassten Umgebungssignale an eine erste Steuereinheit 40 und ein Fahrsystem 30 des Fahrzeugs 10.

Das Fahrzeug 10 weist ferner eine Mehrzahl zweiter Sensoren, insbesondere einen vierten Sensor 51, einen fünften Sensor 52, und einen sechsten Sensor 53 auf. Bei den zweiten Sensoren 51, 52 ,53 handelt es sich um Sensoren zum Ermitteln von das Fahrzeug 10 selbst betreffenden Zustandsdaten, wie beispielsweise aktuelle Lage- und Bewegungsinformationen des Fahrzeugs. Bei den zweiten Sensoren handelt es sich folglich beispielsweise um Geschwindigkeitssensoren, Beschleunigungssensoren, Neigungssensoren, Sensoren zum Messen einer Eintauchtiefe eines Stoßdämpfers, Raddrehzahlsensoren oder dergleichen. Die zweiten Sensoren 51, 52, 53 übermitteln die von ihnen erfassten Zustandssignale an die erste Steuereinheit 40 des Fahrzeugs 10. Darüber hinaus übermitteln die zweiten Sensoren 51, 52, 53 ihre Messergebnisse unmittelbar an ein Fahrsystem 30 des Fahrzeugs 10.

Das Fahrzeug 10 weist ferner ein erstes Kommunikationsmodul 20 mit einem Speicher 21 und einem oder mehreren Transpondern beziehungsweise Sendeempfängern 22 auf. Bei den Transpondern 22 handelt es sich um einen Funk-, WLAN-, GPS- oder Bluetooth-Sendeempfänger oder dergleichen. Der Transponder 22 kommuniziert mit dem internen Speicher 21 des ersten Kommunikationsmoduls 20, beispielsweise über einen geeigneten Datenbus. Das erste Kommunikationsmodul 20 kommuniziert auch mit der ersten Steuereinheit 40. Darüber hinaus ist das erste Kommunikationsmodul 20 dafür eingerichtet, mit einem mobilen Netzwerkserver 70, insbesondere einem Backendserver eines Betreibers von Ladestationen 62 für elektrische Fahrzeuge oder dessen Servicepartner zu kommunizieren. Das erste Kommunikationsmodul 20 ist ferner dafür eingerichtet, mit einem mobilen Endgerät 63 und/oder einem Fahrzeug 64 und mit einer elektrischen Ladestation 62 zu kommunizieren. Die Kommunikation erfolgt dabei insbesondere über eine Drahtlosschnittstelle, beispielsweise über WLAN, ein LTE Mobilfunknetz, Fahrzeug-zu-Fahrzeug Kommunikation und dergleichen.

Das Fahrzeug 10 weist ferner das Fahrsystem 30 auf, das zum vollständig automatischen Fahrbetrieb, insbesondere zur Längs- und Querführung, des Fahrzeugs 10 eingerichtet ist. Das Fahrsystem 30 weist ein Navigationsmodul 32 auf, das zum Berechnen von Routen zwischen einem Start- und einem Zielpunkt und zum Ermitteln der entlang dieser Route vom Fahrzeug 10 durchzuführenden Manöver eingerichtet ist. Das Navigationsmodul 32 ist ferner bevorzugt zum Durchführen spezifischer Manöver des Fahrzeugs 10 ausgebildet, wie beispielsweise Einparkund Ausparkmanöver. Darüber hinaus umfasst das Fahrsystem 30 einen internen Speicher 31, der mit dem Navigationsmodul 32 kommuniziert, beispielsweise über einen geeigneten Datenbus. Die Funktionalität des Fahrsystems 30 wird von der Steuereinheit 40 kontrolliert.

Das Fahrzeug 10 weist ferner das elektrische Fahrsystem 35 auf, welches einen elektrischen Energiespeicher 36 und einen Ladeanschluss 37 aufweist. Der elektrische Energiespeicher 36 kann über den mit einer Ladestation 62 verbundenen Ladeanschluss 37 geladen werden. Die Funktionalität des elektrischen Fahrsystems 35 wird von der Steuereinheit 40 kontrolliert.

Das Fahrzeug 10 weist ferner eine erste Steuereinheit 40 auf, welche zum Durchführen der Schritte des Fahrzeugs 10 im erfindungsgemäßen Verfahren eingerichtet ist. Dabei führt die Steuereinheit 40 die Schritte selbst durch oder steuert die anderen Komponenten des Fahrzeugs 10 entsprechend an. Hierzu verfügt die erste Steuereinheit 40 über einen internen Speicher 41 und eine CPU 42, welche miteinander kommunizieren, beispielsweise über einen geeigneten Datenbus. Darüber hinaus steht die erste Steuereinheit 40 in Kommunikationsverbindung mit zumindest den ersten Sensoren 11, 12, 13, den zweiten Sensoren 51, 52, 53, dem ersten Kommunikationsmodul 20 und dem Fahrsystem 30, beispielsweise über eine oder mehrere jeweilige CAN-Verbindungen, eine oder mehrere jeweilige SPI-Verbindungen, oder andere geeignete Datenverbindungen.

Der Netzwerkserver 70 weist eine zweite Steuereinheit 80 auf, welche zum Durchführen der Schritte des Netzwerkservers 70 im erfindungsgemäßen Verfahren eingerichtet ist. Hierzu verfügt die zweite Steuereinheit 80 über einen internen Speicher 81 und eine CPU 82, welche miteinander kommunizieren, beispielsweise über einen geeigneten Datenbus. Der Netzwerkserver 70 weist ferner ein zweites Kommunikationsmodul 90 auf. Das zweite Kommunikationsmodul 90 weist einen Speicher 92 und einen oder mehrere Transponder beziehungsweise Sendeempfänger 91 auf. Bei den Transpondern 91 handelt es sich um einen Funk-, WLAN-, GPS- oder Bluetooth-Sendeempfänger oder dergleichen. Der Transponder 91 kommuniziert mit dem internen Speicher 92 des zweiten Kommunikationsmoduls 90, beispielsweise über einen geeigneten Datenbus. Bevorzugt ist das zweite Kommunikationsmodul 90 dazu eingerichtet, über ein LTE Mobilfunknetz zu kommunizieren.

Die Ladestation 62 weist und das mobile Endgerät 63 weist jeweils ebenfalls ein drittes beziehungsweise viertes Kommunikationsmodul und eine dritte beziehungsweise vierte Steuereinheit auf. Die Ladestation 62 weist ferner Mittel zum Laden des Batteriesystems 36 eines elektrischen Fahrzeugs 10, insbesondere einen Ladestecker zum Verbinden mit einem Ladeanschluss 37 des elektrischen Fahrsystems 35, auf. Die Ladestation 62 ist bevorzugt mit einer Energiequelle oder einem Energiespeicher, bevorzugt mit einem Stromnetz, verbunden.

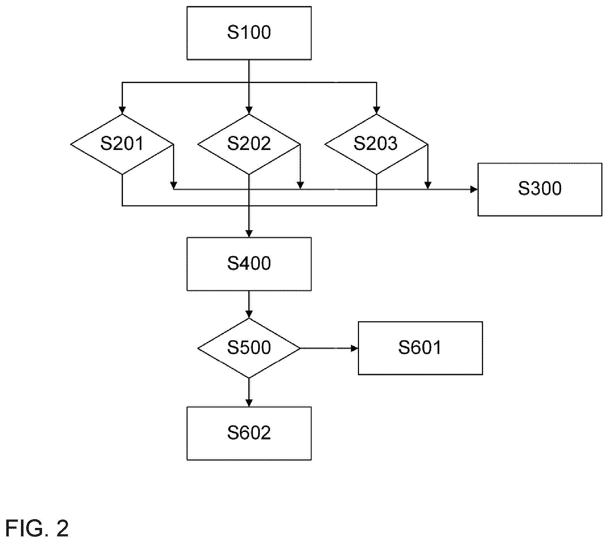

Figur 2 zeigt ein schematisches Ablaufdiagramm eines im erfindungsgemäßen System 100 durchgeführten erfindungsgemäßen Verfahrens gemäß einer Durchführungsform.

In einem ersten Schritt S100 empfängt der Netzwerkserver 70 von dem mobilen Endgerät 63 oder dem Fahrzeug 64 eine Blockademeldung einer bestimmten ersten Ladestation 62. Die Blockademeldung enthält dabei Identifikationsinformationen des mobilen Endgeräts 63 oder des Fahrzeugs 64, Identifikationsinformationen der ersten Ladestation 62 und einen Zeitstempel.

In Reaktion auf den Empfang der Blockademeldung führt der Netzwerkserver in Schritt S200 eine Mehrzahl von Überprüfungen durch, ob eine Zugänglichkeit der Ladestation 62 tatsächlich eingeschränkt ist oder ob es sich um eine unzutreffende Blockademeldung handelt.

Insbesondere prüft der Netzwerkserver 70 in Schritt S201, ob ein aktueller Abstand zwischen dem mobilen Endgerät 63 oder dem Fahrzeug 64 und der ersten Ladestation 62 einen vorbestimmten Grenzwert unterschreitet. Hierzu empfängt der Netzwerkserver 70 eine aktuelle Position von dem mobilen Endgerät 63 oder dem Fahrzeug 64 und berechnet den Abstand zu einer im Netzwerkserver 70 gespeicherten Position der ersten Ladestation 62. Ist der vorbestimmte Abstand nicht unterschritten, wird angenommen, dass sich der Nutzer entfernt von der Ladestation 62 aufhält und somit eine Blockade der Ladestation 62 nicht beurteilen kann. Das Verfahren geht somit zu Schritt S300 über, in dem die Blockademeldung verworfen wird. Wird der vorbestimmte Abstand überschritten, geht das Verfahren zu Schritt S400 über.

Ferner prüft der Netzwerkserver 70 in Schritt S202, ob ein aktueller Ladezustand der ersten Ladestation 62 einen Ladevorgang eines zweiten Fahrzeugs an der ersten Ladestation 62 indiziert. Hierzu wird geprüft, ob ein Stecker der Ladestation mit einem Ladeanschluss des zweiten Fahrzeugs verbunden ist und gegebenenfalls, ob eine Leistungsentnahme durch das zweite Fahrzeug erfolgt. Ist der Stecker im zweiten Fahrzeug nicht oder ohne Leistungsaufnahme gesteckt, wird davon ausgegangen, dass eine Blockade der ersten Ladestation 62, gegebenenfalls durch den zuvor Ladenden, vorliegen kann und das Verfahren geht weiter zu Schritt S400. Ist der Stecker jedoch gesteckt und eine Leistungsaufnahme von der ersten Ladestation 62 durch das zweite Fahrzeug erfolgt, ist die erste Ladestation 62 belegt aber nicht blockiert. In diesem Fall wird die Blockademeldung in Schritt S300 verworfen.

Schließlich prüft der Netzwerkserver 70 in Schritt S203, ob zur aktuellen Zeit überhaupt ein Buchungseintrag für einen mit dem mobilen Endgerät 63 oder dem Fahrzeug 64 verbundenen Nutzer besteht. Die aktuelle Zeit wird dabei anhand des Zeitstempels der Blockademeldung ermittelt und mit Einträgen in einem auf dem Netzwerkserver 70 lokalisierten Buchungssystem verglichen. Besteht für den Nutzer kein aktueller Buchungseintrag ist dieser zur Abgabe einer Blockademeldung nicht berechtigt und diese wird somit in Schritt S300 verworfen. Besteht jedoch ein aktueller Buchungseintrag für den Nutzer geht das Verfahren zu Schritt S400 über.

In S400 erfolgt das Weiterverarbeiten der Blockademeldung. Dafür wird die Blockademeldung vollständig von einem Eingangsspeicher 92 des zweiten Kommunikationsmoduls 90 des Netzwerkservers 70 an eine Steuereinheit 80 des Netzwerkservers übermittelt. Ferner wird durch die Steuereinheit 80 ein Zeitzähler (Timer) gestartet, dessen Länge zu dem für den Nutzer und den Zeitstempel ermittelten Buchungseintrag korrespondiert. Mit anderen Worten wird die Zeit herunter gezählt, für die der Nutzer die erste Ladestation 62 gebucht hatte.

Während der Zeitzähler läuft, wird in Schritt S500 ferner geprüft, ob der Nutzer, also ein mit diesem verknüpftes Fahrzeug 64, an der ersten Ladestation 62 einen Ladevorgang beginnt oder ob die Blockade für die gesamte Dauer des Buchungseintrags andauert. Dauert die Blockade nicht für die gesamte gebuchte Dauer an, sondern wird während der Dauer des ursprünglichen Buchungseintrags ein Ladevorgang gestartet, ist die Blockade beseitigt und der Nutzer erlangt in Schritt S601 einen Anspruch auf teilweise Rückerstattung einer Buchungsgebühr. Der Anteil der Rückerstattung ist bevorzugt durch das Verhältnis der vom Nutzer tatsächlich wahrgenommenen Ladezeit zur ursprünglichen gebuchten Zeit bestimmt. Einen Anspruch auf eine vollständige Rückerstattung erhält der Nutzer in Schritt S601 nicht.

Wird in Schritt S500 hingegen ermittelt, dass die Blockade der ersten Ladestation 62 für die gesamte Dauer des Buchungseintrags andauert, erlangt der Nutzer in Schritt 602 einen Anspruch auf vollständige Rückerstattung einer Buchungsgebühr. Hierzu wird gegebenenfalls ein Eintrag in dem Buchungssystem der Ladestation 62 modifiziert und/oder eine entsprechende Mitteilung von dem Netzwerkserver 70 an einen Zahlungsdienstleister übermittelt. Sofern die Blockade durch den zuvor an der ersten Ladestation 62 ladenden Nutzer, also einer dem Netzwerkserver 70 über ID-informationen bekannten Person, verursacht war, wird gegebenenfalls eine Strafgebühr gegen diesen Nutzer verhängt. Hierfür kann auch ein Eintrag im Buchungssystem modifiziert und ein Zahlungsdienstleister benachrichtigt werden.

### Bezugszeichenliste

- 10: Fahrzeug
- 11: erster Sensor
- 12: zweiter Sensor
- 13: dritter Sensor
- 20: Kommunikationsmodul
- 21: Speicher
- 22: Transponder
- 30: Fahrsystem
- 31: Speicher
- 32: Navigationsmodul
- 35: elektrisches Fahrsystem
- 36: elektrischer Energiespeicher (Batteriesystem)
- 37: Ladeanschluss
- 40: Steuereinheit
- 41: Speicher
- 42: CPU
- 51: vierter Sensor
- 52: fünfter Sensor
- 53: sechster Sensor
- 61: Satellit
- 62: Ladestation
- 63: mobiles Endgerät (Smartphone)
- 70: Netzwerkserver
- 80: Steuereinheit
- 81: Speicher
- 82: CPU
- 90: Kommunikationsmodul
- 91: Transponder
- 92: Speicher
- 100: System

## Patentansprüche

1. Verfahren zum Betrieb eines Buchungssystems einer Ladestation (62) für ein elektrisches Fahrzeug (10), das Verfahren aufweisend die Schritte:
Empfangen einer Blockademeldung betreffend eine Unmöglichkeit einen Ladevorgang an der Ladestation (62) durchzuführen für die Ladestation (62) von einem Nutzer;
Ermitteln eines aktuellen Abstands zwischen dem Nutzer und der Ladestation (62);
Ermitteln eines aktuellen Ladezustands der Ladestation (62), wobei der Ladezustand angibt, ob an der Ladestation (62) aktuell ein Fahrzeug (10) angeschlossen ist und/oder elektrischer Strom durch das Fahrzeug (10) entnommen wird;
Ermitteln eines aktuellen Buchungseintrags der Ladestation (62); und
Verwerfen oder Weiterverarbeiten der Blockademeldung in Abhängigkeit des Abstands, des Ladezustands und des Buchungseintrags,
wobei die Blockademeldung verworfen wird, wenn der ermittelte Abstand einen vorbestimmten Abstand überschreitet, wenn der ermittelte Ladezustand das Laden eines weiteren Fahrzeugs anzeigt oder wenn der ermittelte Buchungseintrag nicht zu dem Nutzer korrespondiert.

2. Verfahren nach Anspruch 1, wobei die Blockademeldung von einem Fahrzeug (10) oder von einem mobilen Endgerät (63) des Nutzers empfangen wird.

3. Verfahren nach Anspruch 2, ferner aufweisend die Verfahrensschritte:
Empfangen einer aktuellen Position des Fahrzeugs (10) oder mobilen Endgeräts (63); und
Ermitteln des Abstands anhand der empfangenen Position und eines Standorts der Ladestation (62).

4. Verfahren nach Anspruch 1, wobei die Blockademeldung von einem Fahrzeug (10) empfangen wird, ferner aufweisend den Verfahrensschritt:
Empfangen des Abstands zwischen dem Fahrzeug (10) und der Ladestation (62), wobei der Abstand von zumindest einem ersten Sensor des Fahrzeugs (10) ermittelt ist.

5. Verfahren nach einem der vorangehenden Ansprüche, wobei der Ladezustand anhand eines Steckerstatus oder einer Leistungsabgabe der Ladestation (62) ermittelt wird.

6. Verfahren nach einem der vorangehenden Ansprüche, wobei die Blockademeldung weiterverarbeitet wird, wenn der ermittelte Abstand einen vorbestimmten Abstand unterschreitet, wenn der ermittelte Ladezustand kein Laden des weiteren Fahrzeugs anzeigt und wenn der ermittelte Buchungseintrag zu dem Nutzer korrespondiert.

7. Verfahren nach Anspruch 6, ferner aufweisend die Verfahrensschritte:
Ermitteln eines Ladevorgangs des Nutzers in einem zu dem ermittelten Buchungseintrag korrespondierenden Zeitfenster; und
Weiterverarbeiten der Blockademeldung im Buchungssystem für eine teilweise Erstattung von Buchungsgebühren.

8. Verfahren nach Anspruch 6, ferner aufweisend die Verfahrensschritte:
Ermitteln keines Ladevorgangs des Nutzers in einem zu dem ermittelten Buchungseintrag korrespondierenden Zeitfenster; und
Weiterverarbeiten der Blockademeldung im Buchungssystem für eine vollständige Erstattung von Buchungsgebühren.

9. Netzwerkserver (70), aufweisend ein zur Datenkommunikation mit einem Fahrzeug (10) und einer Ladestation (62) eingerichtetes Kommunikationsmodul (90); und eine Steuereinheit (80), wobei die Steuereinheit (80) dafür eingerichtet ist:
das Kommunikationsmodul (90) zum Empfangen einer Blockademeldung betreffend eine Unmöglichkeit einen Ladevorgang an der Ladestation (62) durchzuführen für eine Ladestation (62) von einem Nutzer anzusteuern, wobei der Ladezustand angibt, ob an der Ladestation (62) aktuell ein Fahrzeug (10) angeschlossen ist und/oder elektrischer Strom durch das Fahrzeug (10) entnommen wird;
einen aktuellen Abstand zwischen dem Nutzer und der Ladestation (62), einen aktuellen Ladezustand der Ladestation (62) und einen aktuellen Buchungseintrag der Ladestation (62) zu ermitteln; und
die empfangene Blockademeldung in Abhängigkeit des Abstands, des Ladezustands und des Buchungseintrags zu verwerfen oder weiterzuverarbeiten,
wobei die Blockademeldung verworfen wird, wenn der ermittelte Abstand einen vorbestimmten Abstand überschreitet, wenn der ermittelte Ladezustand das Laden eines weiteren Fahrzeugs anzeigt oder wenn der ermittelte Buchungseintrag nicht zu dem Nutzer korrespondiert.

## Claims

1. Method for operating a booking system of a charging station (62) for an electric vehicle (10), the method comprising the steps of:
receiving a blockage message concerning an impossibility of carrying out a charging process at the charging station (62) from a user for the charging station (62);
determining a current distance between the user and the charging station (62);
determining a current charging status of the charging station (62), wherein the charging status indicates whether a vehicle (10) is currently connected to the charging station (62) and/or electrical current is being drawn by the vehicle (10);
determining a current booking entry of the charging station (62); and
discarding or further processing the blockage message depending on the distance, the charging status and the booking entry,
wherein the blockage message is discarded if the determined distance exceeds a predetermined distance, if the determined charging status indicates the charging of a further vehicle or if the determined booking entry does not correspond to the user.

2. Method according to claim 1, wherein the blockage message is received by a vehicle (10) or by a mobile terminal (63) of the user.

3. Method according to claim 2, further comprising the method steps of:
receiving a current position of the vehicle (10) or mobile terminal (63); and
determining the distance based on the received position and a location of the charging station (62).

4. Method according to claim 1, wherein the blockage message is received by a vehicle (10), further comprising the method step of:
receiving the distance between the vehicle (10) and the charging station (62), wherein the distance is determined by at least a first sensor of the vehicle (10).

5. Method according to any of the preceding claims, wherein the charging status is determined based on a plug status or a power output of the charging station (62).

6. Method according to any of the preceding claims, wherein the blockage message is further processed if the determined distance falls short of a predetermined distance, if the determined charging status indicates no charging of the further vehicle and if the determined booking entry corresponds to the user.

7. Method according to claim 6, further comprising the method steps of:
determining a charging process of the user in a window of time corresponding to the determined booking entry; and
further processing of the blockage message in the booking system for a partial refund of booking fees.

8. Method according to claim 6, further comprising the method steps of:
determining no charging process of the user in a window of time corresponding to the determined booking entry; and
further processing of the blockage message in the booking system for a full refund of booking fees.

9. Network server (70) comprising a communication module (90) designed for data communication with a motor vehicle (10) and a charging station (62); and a control unit (80), wherein the control unit (80) is designed to:
control the communication module (90) for receiving a blockage message concerning an impossibility of carrying out a charging process at the charging station (62) from a user for a charging station (62), wherein the charging status indicates whether a vehicle (10) is currently connected to the charging station (62) and/or electrical current is being drawn by the vehicle (10);
determine a current distance between the user and the charging station (62), a current charging status of the charging station (62) and a current booking entry of the charging station (62); and
discard or further process the received blockage message depending on the distance, the charging status and the booking entry,
wherein the blockage message is discarded if the determined distance exceeds a predetermined distance, if the determined charging status indicates the charging of a further vehicle or if the determined booking entry does not correspond to the user.

## Revendications

1. Procédé permettant de faire fonctionner un système de réservation d'une station de recharge (62) pour un véhicule électrique (10), le procédé présentant les étapes consistant à :
recevoir, par un utilisateur, un message de blocage concernant une impossibilité d'effectuer un processus de charge à la station de recharge (62) pour la station de recharge (62) ;
déterminer une distance actuelle entre l'utilisateur et la station de recharge (62) ;
déterminer un état de charge actuel de la station de recharge (62), dans lequel l'état de charge indique si un véhicule (10) est actuellement raccordé à la station de recharge (62) et/ou si du courant électrique est prélevé par le véhicule (10) ;
déterminer un enregistrement de réservation actuel de la station de recharge (62) ; et
rejeter le message de blocage ou poursuivre son traitement en fonction de la distance, de l'état de charge et de l'enregistrement de réservation,
dans lequel le message de blocage est rejeté si la distance déterminée dépasse une distance prédéfinie, si l'état de charge déterminé indique la charge d'un autre véhicule ou si l'enregistrement de réservation déterminé ne correspond pas à l'utilisateur.

2. Procédé selon la revendication 1, dans lequel le message de blocage est reçu par un véhicule (10) ou par un terminal mobile (63) de l'utilisateur.

3. Procédé selon la revendication 2, présentant en outre les étapes de procédé consistant à :
recevoir une position actuelle du véhicule (10) ou du terminal mobile (63) ; et
déterminer la distance à partir de la position reçue et d'un emplacement de la station de recharge (62).

4. Procédé selon la revendication 1, dans lequel le message de blocage est reçu par un véhicule (10), présentant en outre l'étape de procédé consistant à :
recevoir la distance entre le véhicule (10) et la station de recharge (62), dans lequel la distance est déterminée par au moins un premier capteur du véhicule (10).

5. Procédé selon l'une des revendications précédentes, dans lequel l'état de charge est déterminé à l'aide d'un état de prise ou d'une puissance de sortie de la station de recharge (62).

6. Procédé selon l'une des revendications précédentes, dans lequel le message de blocage est traité ultérieurement si la distance déterminée est inférieure à une distance prédéfinie, si l'état de charge déterminé n'indique pas de charge de l'autre véhicule et si l'enregistrement de réservation déterminé correspond à l'utilisateur.

7. Procédé selon la revendication 6, présentant en outre les étapes de procédé consistant à :
déterminer un processus de charge de l'utilisateur dans une fenêtre temporelle correspondant à l'enregistrement de réservation déterminé ; et
traiter ultérieurement le message de blocage dans le système de réservation pour un remboursement partiel des frais de réservation.

8. Procédé selon la revendication 6, présentant en outre les étapes de procédé consistant à :
déterminer qu'aucun processus de charge de l'utilisateur n'a eu lieu dans une fenêtre temporelle correspondant à l'enregistrement de réservation déterminé ; et
traiter ultérieurement le message de blocage dans le système de réservation pour un remboursement complet des frais de réservation.

9. Serveur de réseau (70), présentant un module de communication (90) configuré pour une communication de données avec un véhicule (10) et une station de recharge (62) ; et une unité de commande (80), dans lequel l'unité de commande (80) est configurée pour :
activer le module de communication (90) pour la réception, par un utilisateur, d'un message de blocage concernant une impossibilité d'effectuer un processus de charge à la station de recharge (62) pour une station de recharge (62), dans lequel l'état de charge indique si un véhicule (10) est actuellement raccordé à la station de recharge (62) et/ou si du courant électrique est prélevé par le véhicule (10) ;
déterminer une distance actuelle entre l'utilisateur et la station de recharge (62), un état de charge actuel de la station de recharge (62) et un enregistrement de réservation actuel de la station de recharge (62) ; et
rejeter le message de blocage reçu ou poursuivre son traitement en fonction de la distance, de l'état de charge et de l'enregistrement de réservation,
dans lequel le message de blocage est rejeté si la distance déterminée dépasse une distance prédéfinie, si l'état de charge déterminé indique la charge d'un autre véhicule ou si l'enregistrement de réservation déterminé ne correspond pas à l'utilisateur.
